(19) Europäisches Patentamt
European Patent Office
Office européen des brevets

(11) **EP 1 335 549 B1**

(12) **EUROPÄISCHE PATENTSCHRIFT**

(45) Veröffentlichungstag und Bekanntmachung des
Hinweises auf die Patenterteilung:
**26.04.2006 Patentblatt 2006/17**

(51) Int Cl.:
*H04L 27/20* (2006.01)     *H04L 25/49* (2006.01)

(21) Anmeldenummer: **02405080.9**

(22) Anmeldetag: **06.02.2002**

(54) **Verfahren zum Erzeugen und Einrichtung zum Empfangen eines anisochronen binären Signals**

Method for transmission and device for reception of an anisochronous binary signal

Procédé d'émission et dispositif de réception d'un signal anisochrone binaire

(84) Benannte Vertragsstaaten:
**AT BE CH CY DE DK ES FI FR GB GR IE IT LI LU
MC NL PT SE TR**

(43) Veröffentlichungstag der Anmeldung:
**13.08.2003 Patentblatt 2003/33**

(73) Patentinhaber: **ABB Schweiz AG
5400 Baden (CH)**

(72) Erfinder: **Benninger, Hans
5300 Ennetturgi (CH)**

(74) Vertreter: **ABB Patent Attorneys
c/o ABB Schweiz AG,
Intellectual Property (CH-LC/IP),
Brown Boveri Strasse 6
5400 Baden (CH)**

(56) Entgegenhaltungen:
**EP-A- 0 516 484          US-A- 3 889 236**

• **"GEZAEHMTE FM VERRINGERT BANDBREITE"
ELEKTRONIK, FRANZIS VERLAG GMBH.
MUNCHEN, DE, Bd. 27, Nr. 13, November 1978
(1978-11), Seite 20 XP000761389 ISSN: 0013-5658**

**Beschreibung**

Technisches Gebiet

Die Erfindung betrifft ein Verfahren und eine Vorrichtung zum Übertragen bzw. Empfangen eines binären Signals, d.h. eines Signals mit zwei möglichen Zuständen, insbesondere eines anisochronen Signals, gemäss Oberbegriff der unabhängigen Ansprüche.

Stand der Technik

Frequenzumtastung (FSK = Frequency Shift Keying) ist ein seit langem bekanntes asynchrones Modulation verfahren, das eine bescheidene Bandbreiteneffizienz von ca. 0.7 bps/Hz aufweist, wogegen mit modernen synchronen QAM- oder MC-Modulationsverfahren bei gleicher Störfestigkeit Effizienzen von ca. 3 bps/Hz erreicht werden. Trotzdem wird FSK für spezifische Anwendungen auch heute noch eingesetzt, denn es ist geeignet für anisochrone binäre Daten, d.h. für binäre Signale, die nicht an einen gegebenen Takt gebunden sind. Ferner ist es geeignet für Punkt-Mehrpunktübertragung, besitzt eine kurze Signalverzögerungszeit in der Grössenordnung weniger Symbollängen sowie eine kurze Erholzeit nach einem Unterbruch.

Zur Übertragung anisochroner Daten können zwar auch isochrone, d.h. taktgebundene Formate eingesetzt werden. Eine geeignete Umwandlungsmethode ist in der ITU-T-Empfehlung R.111 niedergelegt. Durch die Umwandlung wird jedoch die zu übertragende Datenrate rund vervierfacht, so dass die Bandbreiteneffizienz wiederum gering ist.

Systeme mit Punkt-Mehrpunktübertragung bestehen aus einer Zentrale und mehreren Aussenstationen, die alle über den gleichen Übertragungskanal verbunden sind. Die Zentrale tauscht zyklisch nacheinander mit allen Aussenstationen Daten aus, wobei die Grösse der Datenpakete oftmals gering ist (z.B. einige 10 Bits). Eine wichtige Grösse bei derartigen Systemen ist die Zykluszeit, d.h. die Zeit, die die Zentrale benötigt, um mit allen Aussenstationen einmal Daten auszutauschen. Bei geringer Grösse der Datenpakete hängt die Zykluszeit in erster Linie ab von der Signalverzögerungszeit und der Zeit zum Ab- und Aufbau einer Verbindung beim Wechsel von einer Aussenstation auf die nächste. Diese Zeiten sind bei bekannten synchronen Modulationsverfahren wesentlich länger als bei asynchronen Verfahren wie FSK.

Die Patentanmeldung EP 0 516 484 beschreibt ein Frequenzmodulationsverfahren, bei welchem eine unbeabsichtigte Invertierung des empfangenen Signals vermieden wird. Dazu wird beim Sender ein Teilsignal invertiert, falls die lokalen Frequenzen beim Empfänger und Sender unterschiedlich angeordnet sind.

Die Patentanmeldung US 3 889 236 beschreibt einen Empfänger für anisochrone Signale.

Darstellung der Erfindung

Es stellt sich deshalb die Aufgabe, ein Verfahren bzw. eine Vorrichtung der eingangs genannten Art bereitzustellen, welche eine bessere Bandbreiteneffizienz als das FSK-Modulationsverfahren besitzt, möglichst ohne wesentliche Einbussen bei den oben erwähnten Vorteilen dieses Modulationsverfahrens.

Diese Aufgabe wird durch das Verfahren und die Vorrichtung gemäss den unabhängigen Ansprüchen gelöst. Erfindungsgemäss werden also mindestens drei Zustände unterschiedlicher Phase vorgegeben, welche das Übertragungssignal annehmen kann. Ausserdem wird mindestens eine Durchlaufreihenfolge durch die Zustände vorgegeben, wobei bei jedem Wechsel des Quellsignals der Zustand des Übertragungssignals normalerweise gemäss der jeweiligen Durchlaufreihenfolge zum nächsten Zustand gewechselt wird. Somit kann der Empfänger bei jedem Wechsel des Zustands schliessen, dass das Signal von 0 auf 1 oder von 1 auf 0 gewechselt hat, wobei dank der Verwendung von mindestens drei Zuständen die verwendete Bandbreite reduziert werden kann. Damit der Empfänger bestimmen kann, ob das Signal momentan 0 oder 1 ist, d.h. zur Synchronisation von Sender und Empfänger, wird, wenn das Quellsignal während einer vorgegebenen Mindestzeit den Zustand nicht wechselt, entsprechend einer vorgegebenen Regel beim nächsten Wechsel des Quellsignals abhängig vom momentanen Wert des Quellsignals entweder auf den nächsten Zustand gemäss Durchlaufreihenfolge oder auf einen anderen Zustand gewechselt.

Dabei wird ausgenutzt, dass, wenn das Signal länger konstant bleibt, freie Bandbreite zur Verfügung steht, um den momentanen Wert des Quellsignals zu übertragen. Der Empfänger kann somit den Momentanwert durch Anwenden der Regel bestimmen.

Eine besonders gute Ausnutzung der zur Verfügung stehenden Bandbreite ergibt sich, wenn $n > 2$ Zustände $Z_0$ bis $Z_{n-1}$ vorgegeben werden, deren Phasen die Werte $0, 2*pi/n, 4*pi/n, ... (n-1)*2*pi/n$ besitzen. Die Durchlaufreihenfolge ist in diesem Fall so, dass die Zustände Zi zyklisch mit zunehmendem oder mit abnehmenden Index i durchlaufen werden. Vorzugsweise wird, auch wieder im Hinblick auf die Bandbreiteneffizienz, die Regel so gewählt, dass ausgehend vom Zustand mit Index i beim nächsten Wechsel des Quellsignals abhängig vom Momentanwert des Quellsignals entweder auf den Zustand mit Index $(i+1)$ mod n oder den Zustand mit Index $(i-1)$ mod n gewechselt wird, wobei z.B.

auch der Durchlaufsinn der Durchlaufreihenfolge umgekehrt werden kann.

Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:

Fig. 1 das zu übertragende Quellsignal und zwei daraus abgeleitete Teilsignale,
Fig. 2 die Zustände des zu übermittelnden Übertragungssignals,
Fig. 3 einen ersten Teil eines Senders,
Fig. 4 einen zweiten Teil eines Senders,
Fig. 5 einen ersten Teil eines Empfängers,
Fig. 6 einen zweiten Teil eines Empfängers,
Fig. 7 Signalverläufe im Empfänger und
Fig. 8 acht mögliche Zustände des zu übermittelnden Übertragungssignals.

Wege zur Ausführung der Erfindung

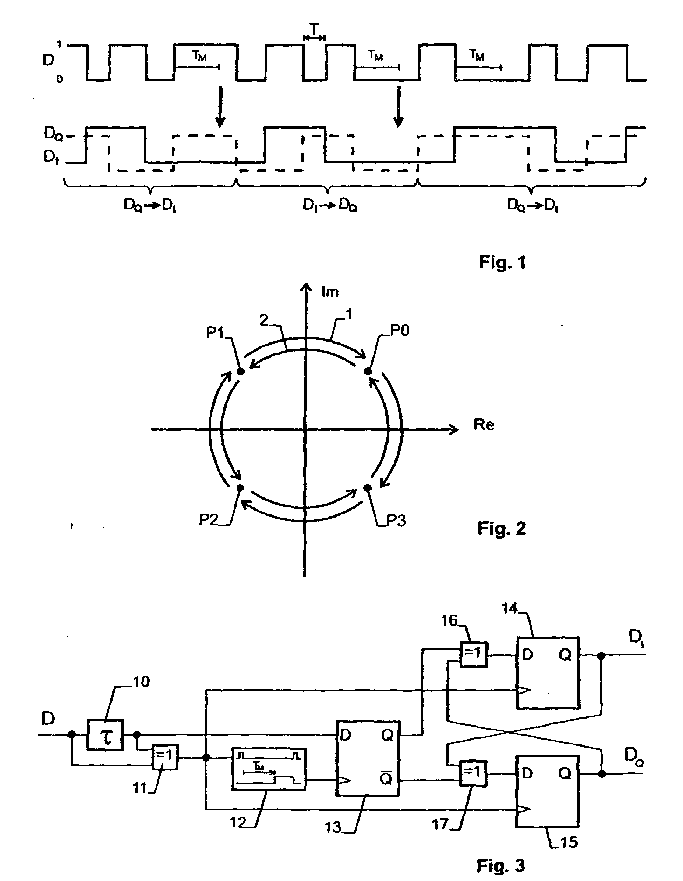

In einem ersten Schritt wird eine Ausführung des erfindungsgemässen Verfahrens anhand von Fig. 1 dargestellt.
Der obere Teil von Fig. 1 zeigt das zu übertragende binäre Quellsignal D. Hierbei kann es sich um ein isochrones oder anisochrones Signal handeln, mit der einzigen Vorgabe, dass seine Symbolzeit eine gegebene Auflösungszeit T nicht unterschreiten darf, d.h. nach einem Zustandswechsel muss das Quellsignal mindestens während der Auflösungszeit T konstant bleiben.
In einer möglichen Betrachtungsweise des Verfahrens wird das Quellsignal D vom Sender in zwei Teilsignale $D_I$ und $D_Q$ mit halber Datenrate aufgeteilt, welche z.B. je die Werte 1 oder -1 besitzen können. Zur Erzeugung der Teilsignale wird nach folgender Vorschrift vorgegangen:

1. Ändert sich das Quellsignal D nach einem Zustandswechsel innerhalb einer vorgegebenen Mindestzeit $T_M \geq 2 \cdot T$ erneut, so wechselt beim erneuten Zustandswechsel eines der Teilsignale $D_I$, $D_Q$ seinen Wert, und zwar dasjenige Teilsignal, welches beim letzten Zustandswechsel des Quellsignals unverändert geblieben ist. In diesem Fall ändern die Teilsignale also abwechselnd ihren Wert.
2. Ändert sich das Quellsignal D nach einem Zustandswechsel innerhalb der vorgegebenen Mindestzeit $T_M$ nicht, so ändert beim nächsten Zustandswechsel des Quellsignals immer das gleiche Teilsignal, z.B. $D_Q$, seinen Wert unabhängig vom momentanen Zustand der Teilsignale $D_I$, $D_Q$ und unabhängig davon, welches der Teilsignale beim letzten Zustandswechsel geändert hat.

Durch Vorschrift 1 ist sichergestellt, dass die maximale Datenrate der Teilsignale $D_I$, $D_Q$ höchstens je die Hälfte der Datenrate des Quellsignals D beträgt. Vorschrift 2 erlaubt eine Synchronisation von Sender und Empfänger, wie dies in den weiteren Ausführungen erläutert wird, ohne dass die Datenrate der Teilsignale die Hälfte der maximalen Datenrate 1/T des Quellsignals D übersteigt.
Im Sender werden die Teilsignale $D_I$ und $D_Q$ zur Erzeugung eines Übertragungssignals s mit der Trägerkreisfrequenz $\omega$ verwendet, wobei

$$s(t) = \frac{1}{\sqrt{2}} * \left( D_I * \cos(\omega t) - D_Q * \sin \omega \right). \qquad (1)$$

In komplexer Schreibweise ist dies

$$s(t) = \frac{1}{\sqrt{2}} * \mathrm{Re}\left[\left( D_I + jD_Q \right) \exp(j\omega t)\right], \qquad (2)$$

d.h. die Teilsignale $D_I$ und $D_Q$ entsprechen dem Real- und Imaginärteil des komplexen Signals.
Das Modulationsverfahren kann in anderer Weise auch durch Zustände in der komplexen Ebene dargestellt werden. In dieser Betrachtungsweise kann das Übertragungssignal s gemäss Gleichung (2) vier Zustände $P_0$, $P_1$, $P_2$

und P$_3$ einnehmen, wie sie in Fig. 2 dargestellt sind, welche die Phasen π/4, 3π/4, 5π/4 und 7π/4 besitzen. Bei jedem Zustandswechsel des Quellsignals geht das Übertragungssignal s vom jeweiligen Zustand P$_i$ zu einem der benachbarten Zustände P$_{(i-1) \bmod 4}$ oder P$_{(i+1) \bmod 4}$ über, entsprechend einer der in Fig. 2 eingezeichneten Durchlaufreihenfolgen 1 oder 2. Die Durchlaufreihenfolge wird durch Vorschrift 2 festgelegt, wenn sich das Quellsignal D nach einem Zustandswechsel innerhalb der vorgegebenen Mindestzeit T$_M$ nicht ändert: Ist der momentane Wert des Quellsignals D 0, so wird im Folgenden die Durchlaufreihenfolge 2 im Gegenuhrzeigersinn gewählt - ist der Wert 1, so wird im Folgenden die Durchlaufreihenfolge 1 im Uhrzeigersinn gewählt.

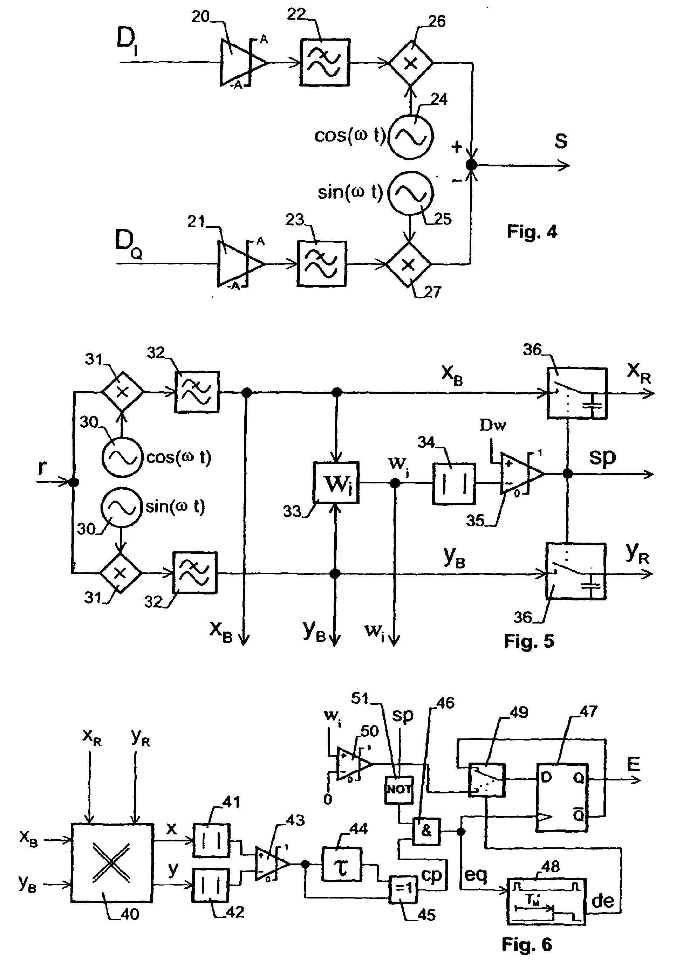

Fig. 3 und 4 zeigen einen Sender zum Erzeugen des Übertragungssignals. Ein Verzögerungsglied 10 und ein Exklusiv-Oder-Gatter 11 erzeugen aus den Flanken des Quellsignals D kurze Impulse der Länge τ << T. Ein Zeitglied 12 aktiviert seinen Ausgang jedesmal, wenn der zeitliche Abstand zwischen zwei aufeinander folgenden Impulsen grösser als T$_M$ ist. Da das Ausgangssignal des Zeitglieds 12 mit dem Takteingang eines Flipflop 13 und der Dateneingang dieses Flipflop 13 mit dem um τ verzögerten Datensignal D verbunden ist, speichert dieser den Wert des Quellsignals D, wenn sich dieses während einer Zeitdauer von T$_M$ nicht geändert hat. Das in 13 gespeicherte Signal gibt die zeitliche Reihenfolge der Teilsignale D$_I$ und D$_Q$ vor, die in Flipflop 14 und 15 gespeichert sind. Die Zusammenschaltung der Flipflops 14, 15 mit Exklusiv-Oder Gattern 16 und 17 bewirkt, dass der Verlauf von D$_Q$ dem Signal D$_I$ nachfolgt, wenn der Q-Ausgang von Flipflop 13 aktiv ist. Wenn der Q-Ausgang von Flipflop 13 inaktiv ist, folgt der Verlauf von D$_I$ dem Signal D$_Q$ nach.

Das Übertragungssignal s(t) lässt sich aus den Teilsignalen D$_I$ und D$_Q$ wie in Fig. 4 gezeigt erzeugen: Zwei Umsetzer 20 und 21 konvertieren die Logiksignale mit den Werten 1 und 0 in analoge Signale mit den Amplituden A und -A, deren Bandbreite mit Tiefpassfiltern 22 und 23 begrenzt wird. Das Übertragungssignal s(t) entsteht durch Überlagerung der bandbreitenbegrenzten Signale, nachdem sie mit den in Generatoren 24 und 25 erzeugten Trägersignalen cos (ωt) und sin (ωt) in Modulatoren 26 und 27 moduliert worden sind. Das Übertragungssignal s(t) wird nun bei der Übermittlung über den Übertragungskanal verzögert, gestört und verzerrt und erreicht den Empfänger als Übertragungssignal r(t).

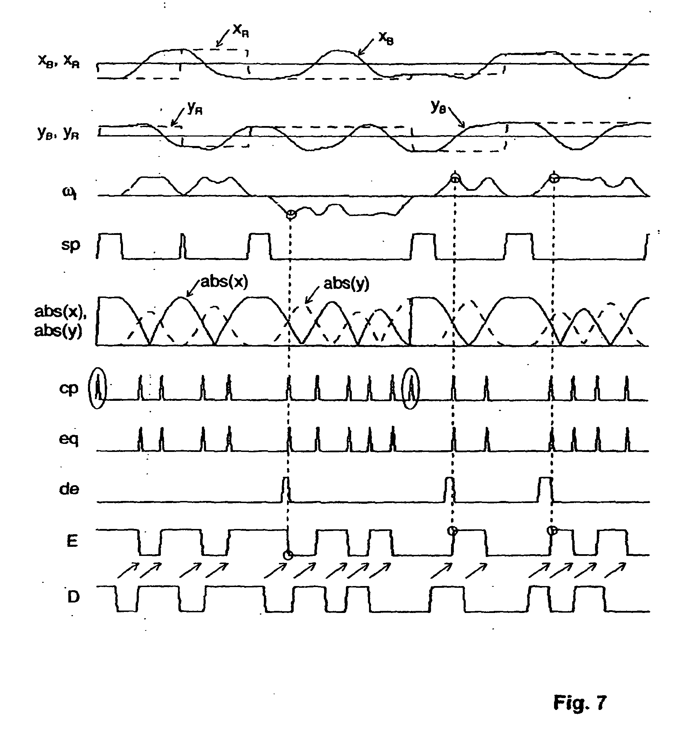

Nachfolgend wird anhand von Fig. 5 und 6 erläutert, wie im Empfänger aus dem empfangenen Übertragungssignal r(t) ein Empfangs-Datensignal E ermittelt werden kann, wobei E idealerweise dem Sende-Datensignal D bis auf eine Zeitverzögerung, hervorgerufen durch den Übertragungskanal und die Signalverarbeitung in Sender und Empfänger, genau entsprechen sollte. Zur Verdeutlichung der Erklärungen sind in Fig. 7 die Signalverläufe der wichtigsten Signale im Empfänger dargestellt.

Ausgehend vom Übertragungssignal r(t) wird in Fig. 5 mittels Trägergeneratoren 30 sowie Modulatoren 31 zuerst die Trägerfrequenz ω aus dem Empfangssignal entfernt. Das Basisbandsignal x$_B$, y$_B$ bzw. die momentane Phasenlage erhält man durch Bandbegrenzung mittels zweier Tiefpassfilter 32. Der nachfolgende Block 33 erzeugt die Momentanfrequenz w$_i$(t) des Basisbandsignals z.B. durch Auswertung der Formel

$$w_i(t) = \frac{\partial}{\partial t} \arctan\left(\frac{y_B(t)}{x_B(t)}\right) = \frac{x_B * \dfrac{\partial y_B}{\partial t} - y_B * \dfrac{\partial x_B}{\partial t}}{x_B{}^2 + y_B{}^2}. \qquad (3)$$

Ein Absolutwert-Erzeuger 34 ermittelt den Absolutwert der Momentanfrequenz |w$_i$|, die in einem Komparator 35 mit einer Schwelle Δw << 1/T verglichen wird. Mittels "sample-and-hold" Speichern 36 wird das Basisbandsignal x$_B$, y$_B$ abgetastet, solange |w$_i$| < Δw. Steigt |w$_i$| über die Schwelle Δw, wird der abgetastete Wert in den Speichern 36 gehalten und steht für die weiteren Verarbeitungsschritte im Empfänger als Referenzsignal x$_R$, y$_R$ zur Verfügung.

Im Gegensatz zu herkömmlichen Phasensynchronisations-Methoden benötigt die Erzeugung von x$_R$, y$_R$ keine langen Synchronisations-Sequenzen und ist somit besonders geeignet für den Punkt-Mehrpunktbetrieb.

Fig. 6 zeigt, wie aus dem Basisbandsignal x$_B$, y$_B$, dem Referenzsignal x$_R$, y$_R$, einem Abtast-Kontrollsignal sp und der Momentanfrequenz w$_i$ das Empfangsdatensignal E gewonnen werden kann. In einem Rechenwerk 40 wird die Phase des Basisbandsignals relativ zum Referenzsignal korrigiert, wobei das phasenkorrigierte Signal x, y nach folgenden Formeln berechnet wird:

$$x = x_B * x_R + y_B * y_R$$

$$y = y_B * x_R - x_B * y_R$$

In Absolutwert-Erzeugern 41 und 42 werden die Absolutbeträge |x|, |y| des phasenkorrigierten Signals gebildet und in Komparator 43 miteinander verglichen. Zu den Zeitpunkten |x| = |y| geht die Phase arctan(y/x) durch einen der Werte $\pm\pi/4$ oder $\pm 3\pi/4$ und das vom Komparator 43 gebildete Vergleichssignal wechselt seinen Zustand, d.h. der Winkel zwischen dem momentanen Phasenwert bzw. dem Basisbandsignal und dem Referenzsignal wird mit der Schwelle $\pm\pi/4$ bzw. $\pm 3\pi/4$ verglichen. (In der Praxis wird man die in Komparator 43 durchgeführte Vergleichsoperation mit einer Hysterese versehen, um die Operation robuster gegen Störungen der Übertragung zu machen.)

Die Zustandswechsel des Vergleichssignals werden mittels eines Verzögerungsgliedes 44 und eines Exlusiv-Oder-Gatters 45 in kurze Impulse der Länge $\tau \ll T$ umgeformt, die über ein UND-Gatter 46 an den Takteingang eines Flipflops 47 und an den Eingang eines Zeitgliedes 48 gelegt werden. Solange die Impulse zeitlich weniger als eine modifizierte Mindestzeit $T_{M'} > T_M$ auseinander liegen, bleibt der Ausgang des Zeitgliedes inaktiv und der Umschalter 49 ist so gestellt, dass der Dateneingang und der invertierte Datenausgang des Flipflop 47 miteinander verbunden sind und somit der Flipflop 47 bei jedem Impuls seinen Zustand wechselt. Liegen die Impulse jedoch mehr als die Mindestzeit $T_M'$ auseinander, wechselt der Ausgang des Zeitglieds 48 in den aktiven Zustand, und der Umschalter 49 verbindet den Ausgang eines Komparators 50 mit dem Dateneingang des Flipflops 47, so dass dieser beim nächsten Impuls den Zustand des Ausgangs des Komparators 50 speichert. Wenn die Referenzsignale $x_R$, $y_R$ nachgeführt werden, d.h. solange das Signal sp aktiv ist, können unerwünschte Impulse im Signal cp am Ausgang des Gatters 45 auftreten. Im Signal eq treten diese Impulse nicht mehr auf, da sie mittels eines Invertierers 51 und des UND-Gatters 46 unterdrückt werden.

Im Komparator 50 wird die Momentanfrequenz $w_i$ mit 0 verglichen, d.h. das Vorzeichen von $w_i$ ermittelt. Das empfangene Datensignal E ist das Ausgangssignal des Flipflops 47 und entspricht somit dem Vorzeichen von $w_i$, wenn ein Impuls einen zeitlichen Abstand von mindestens $T_M'$ auf seinen Vorgänger aufweist. Ist der Abstand kleiner als $T_M'$, wechselt das Datensignal seinen Zustand ohne Rücksicht auf die Polarität von $w_i$.

Bei der Festlegung des Werts $T_M'$ muss berücksichtigt werden, dass sich die Positionen der Flanken des Datensignals bei Störungen der Übertragung gegenüber dem ungestörten Fall in zufälliger Weise verschieben. Solange diese Verschiebungen gemäss einer Faustregel im Bereich - 0.3 bis +0.3T liegen, kann die Übertragungsqualität noch als ausreichend betrachtet werden. Der zeitliche Abstand zweier Flanken des zu übertragenden Datensignals könnte danach bei ausreichender Übertragungsqualität durch die Übertragung um bis zu 0.6T vergrössert oder verkleinert werden, so dass für $T_M'$ ein Wert von mindestens $T_M+0.6T$ gewählt werden sollte.

Im Empfänger gemäss Fig. 5 und 6 bilden die Komponenten 30 - 32 einen Phasendetektor zur Detektion der relativen momentanen Phasenlage des empfangenen Obertragungssignals r(t). Die Komponenten 33 - 45 bilden einen Änderungsdetektor zum Erzeugen eines Taktsignals bei einer Änderung der Phasenlage bei einem Wechsel des Zustands des Übertragungssignals. Das Flipflop 47 bildet eine bistabile Schaltung zum Erzeugen des Ausgangssignals E und ist umschaltbar durch den Phasendetektor. Das Zeitglied 48 bildet eine Verweilerkennung zum Erzeugen eines Synchronisationssignals, wenn eine letzte Änderung der Phasenlage um mehr als die modifizierte Mindestzeit $T_M'$ zurück liegt. Die Komponenten 49 und 50 bilden eine Synchronisationsschaltung, welche die bistabile Schaltung bei Vorliegen des Synchronisationssignals beim nächsten Taktsignal entsprechend Vorschrift 2 setzt oder zurücksetzt.

Im folgenden wird eine Verallgemeinerung des bisher beschriebenen Verfahrens erläutert.

Im oben erläuterten Verfahren besass das Übertragungssignal vier mögliche Zustände $P_0$, $P_1$, $P_2$ und $P_3$, wie sie in Fig. 2 dargestellt sind, mit den Phasen $\pi/4$, $3\pi/4$, $5\pi/4$ und $7\pi/4$. Dabei ist zu berücksichtigen, dass es sich bei Phasen immer um relative Werte im Vergleich zu einer willkürlich angenommenen Nulllage handelt, da die Oszillatoren des Senders und Empfängers nicht phasengleich laufen, und die Phase des Zustands $P_0$ kann z.B. ebensogut als 0 definiert werden. In Fig. 2 könnte Zustand Pi also ebensogut der Phase $\pi i/2$ zugeordnet werden. In der folgenden Beschreibung und den Ansprüchen kann zu allen Phasenlagen eine beliebige Konstante (z.B. $\pi/4$) addiert werden kann, ohne dass vom Konzept der Erfindung abgewichen wird.

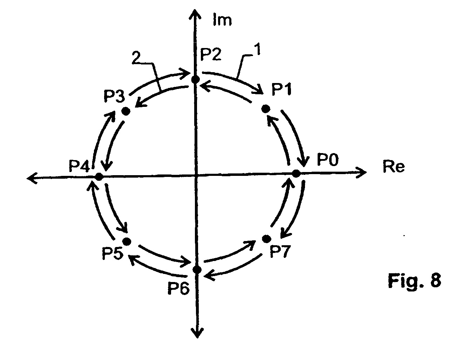

Generell kann das vorliegende Verfahren auch durchgeführt werden, wenn für das Übertragungssignal nur drei mögliche Zustände, oder auch mehr als vier mögliche Zustände vorgesehen werden. Werden n Zustände $P_0$ bis $P_{n-1}$ vorgesehen, so besitzen diese Vorzugsweise die Phasen 0, 2*pi/n, 4*pi/n, ... (n-1)*2*pi/n. In Fig. 8 sind die enstprechenden Zustände für n = 8 dargestellt.

Es ist auch denkbar, die Zustände in anderer Weise als auf einem Kreis anzuordnen, d.h. sie können sich z.B. auch noch zusätzlich durch ihre Amplituden unterscheiden. Allerdings wird dann empfangsseitig eine entsprechend genaue Amplitudenregelung erforderlich, die bei Punkt-Mehrpunktbetrieb sehr kurze Einschwingzeiten aufweisen muss.

Je grösser die Zahl n ist, desto tiefer kann die Bandbreite des übertragenen Signals sein, wobei jedoch das Signal/Rausch-Verhältnis schlechter wird.

In Fig. 8 sind die bevorzugten zwei Durchlaufreihenfolgen 1 und 2 eingezeichnet, wonach nach dem Zustand $P_i$ der Zustand $P_{(i+1) \bmod n}$ oder der Zustand $P_{(i-1) \bmod n}$ eingenommen wird. Bei diesen Durchlaufreihenfolgen ist der Phasenwechsel zwischen aufeinander folgenden Zuständen und somit die benutzte Bandbreite minimal.

In der eingangs beschriebenen Ausführung wurde die Synchronisation des Empfängers dadurch erzielt, dass bei längerer Konstanz des Quellsignals die im Folgenden zu verwendende Durchlaufreitenfolge abhängig vom momentanen Wert des Quellsignals gewählt wurde. Es ist jedoch auch möglich, eine andere Regel zu verwenden. Insbesondere kann z.B., wenn das Quellsignal während der Mindestzeit den Zustand nicht wechselt, eine der folgenden Regeln verwendet werden:

A) Ist der Wert des Quellsignals 0, so wird die momentane Durchlaufreihenfolge beibehalten, sonst wird sie umgekehrt. Oder, gleichwertig, ist der Wert des Quellsignals 1, so wird die momentane Durchlaufreihenfolge beibehalten, sonst wird sie umgekehrt.

B) Ist der Wert des Quellsignals 0, so wird im Folgenden die Durchlaufreihenfolge 1 gewählt, sonst die Durchlaufreihenfolge 2 (vgl. obiges Ausführungsbeispiel). Oder, gleichwertig, ist der Wert des Quellsignals 1, so wird im folgenden die Durchlaufreihenfolge 1 gewählt, sonst die Durchlaufreihenfolge 2.

C) Ist der Wert des Quellsignals 0, so wird beim nächsten Wechsel des Quellsignals der nächste Zustand gemäss Durchlaufreihenfolge gewählt, sonst der übernächste (oder umgekehrt). In diesem Fall bleibt die Durchlaufreihenfolge immer die Gleiche.

D) Ist der Wert des Quellsignals 0, so wird einmalig beim nächsten Wechsel des Quellsignals der nächste Zustand gemäss Durchlaufreihenfolge gewählt, sonst der vorhergehende (oder umgekehrt). Auch in diesem Fall bleibt die Durchlaufreihenfolge immer die Gleiche.

In allen Fällen kann der Empfänger feststellen, was der Wert des Quellsignals war, und somit eine Synchronisation durchführen. Diese Synchronisation findet beim ersten Wechsel des Quellsignals nach einer Konstantphase, welche mindestens der Zeit $T_M$ andauert, statt, da zu diesem Zeitpunkt zusätzliche Bandbreite zur Übertragung der Synchronisationsinformation zur Verfügung steht.

In den Varianten A, B und D wird, wenn das Quellsignal den Zustand während mindestens der Zeit $T_M$ nicht wechselt und das Übertragungssignal sich im Zustand $P_i$ befindet, beim nächsten Wechsel entweder der vorangehende Zustand $P_{(i-1) \bmod n}$ oder der nächste Zustand $P_{(i+1) \bmod n}$ gewählt, und zwar abhängig vom momentanen Wert des Quellsignals D.

Für Signale, die ihren Wert sehr lang nicht ändern, führt dieses Verfahren jedoch dazu, dass die Synchronisation, welche erst bei einem Wechsel des Quellsignals stattfinden kann, unter Umständen relativ spät erfolgt. Um solche Fälle zu berücksichtigen, kann die Synchronisationsinformation zusätzlich z.B. über einen separaten Datenkanal übertragen werden. Oder es ist denkbar, dass bei konstantem Wert des Quellsignals zur Synchronisation von Sender und Empfänger zusätzlich eine Amplitudenmodulation des Übertragungssignals abhängig vom Wert des Quellsignals durchgeführt wird. So kann z.B. das Übertragungssignal mit einer Frequenz, welche sehr viel kleiner als 1/T ist, mit geringer Amplitude amplitudenmoduliert werden, falls der Wert des Quellsignals 1 ist, während keine Amplitudenmodulation (oder eine Amplitudenmodulation bei anderer Frequenz) erfolgt, wenn das Quellsignal 0 ist. Im Empfänger kann ein entsprechender Detektor vorgesehen sein, der bei längerer Konstanz des Quellsignals die Amplitudenmodulation detektiert und den Empfänger synchronisiert. Da die Amplitudenmodulation mit einer Frequenz sehr viel kleiner als 1/T erfolgt, wird die Bandbreite des Übertragungssignals nicht unzulässig erhöht.

In den soweit dargestellten Ausführungsbeispielen wurden Sender und Empfänger bestehend aus diskreten Funktionsblöcken dargestellt. Sie können jedoch auch in anderer Weise implementiert werden, insbesondere in Form programmgesteuerter digitaler Signalverarbeitungsschaltungen, wobei die in Fig. 3 - 6 gezeigten Funktionsblöcke vorzugsweise als entsprechende funktionale Teile eines Computerprogramms implementiert werden.

Bezugszeichenliste

1, 2:      Durchlaufrichtungen
10:        Verzögerungsglied
11:        Exklusiv-Oder-Gatter
12:        Zeitglied
13:        Flipflop
14:        Flipflop
15:        Flipflop
16, 17:    Exklusiv-Oder Gatter
20, 21:    Umsetzer
22, 23:    Tiefpassfilter
30:        Trägergeneratoren
31:        Modulatoren
32:        Tiefpassfilter

| 33: | Block |
|---|---|
| 34: | Absolutwerterzeuger |
| 35: | Komparator |
| 36: | Speicher |
| 40: | Rechenwerk |
| 41, 42: | Absolutwerterzeuger |
| 43: | Komparator |
| 44: | Verzögerungsglied |
| 45: | Exlusiv-Oder-Gatter |
| 46: | UND-Gatter |
| 47: | Flipflop |
| 48': | Zeitglied |
| 49: | Umschalter |
| 50: | Komparator |
| 51: | Invertierer |

| cp: | Taktsignal |
|---|---|
| de: | Synchronisationssignal |
| D: | Binäres Quellsignal |
| $D_i$, $D_Q$: | Teilsignale |
| E: | Ausgangssignal |
| $P_i$: | Zustände des Übertragungssignals |
| r(t): | empfangenes Übertragungssignal |
| s(t): | Übertragungssignal |
| T: | Auflösungszeit |
| $T_M$: | Mindestzeit |
| $T_M$': | modifizierte Mindestzeit |

**Patentansprüche**

1. Verfahren zum Übertragen eines binären Quellsignals (D) mit zwei Zuständen in einem Übertragungssignal (s) mit modulierter Phase zwischen einem Sender und einem Empfänger, wobei mindestens drei Zustände (Pi) unterschiedlicher Phase für das Übertragungssignal (s) vorgegeben werden und bei jedem Wechsel des Quellsignals (D) der Zustand des Übertragungssignals (s) gewechselt wird, **dadurch gekennzeichnet, dass**

    - das binäre Quellsignal (D) anisochron ist und das Übertragungssignal (s) anisochron übertragen wird
    - mindestens eine Durchlaufreihenfolge (1, 2) durch die Zustände (Pi) vorgegeben wird, welche zu jedem Zustand genau einen nächsten Zustand definiert,
    - und wenn das Quellsignal (D) während einer vorgegebenen Mindestzeit den Zustand nicht wechselt, beim nächsten Wechsel des Quellsignals (D), gemäss einer vorgegebenen, vom Momentanwert des Quellsignals (D) abhängigen Regel entweder auf den nächsten Zustand gemäss der Durchlaufreihenfolge (1, 2) oder auf einen anderen Zustand, gewechselt wird.

2. Verfahren nach einem der vorangehenden Ansprüche, **dadurch gekennzeichnet, dass** n Zustände $P_0$ bis $P_{n-1}$ vorgegeben werden, deren Phasen die Werte 0, 2*pi/n, 4*pi/n, ... (n-1)*2*pi/n besitzen, und dass die Durchlaufreihenfolge vorschreibt, die Zustände $P_i$ zyklisch mit zunehmendem oder mit abnehmenden Index i zu durchlaufen.

3. Verfahren nach Anspruch 2, **dadurch gekennzeichnet, dass** die Regel vorschreibt, dass ausgehend vom Zustand mit Index i beim nächsten Wechsel des Quellsignals (D) abhängig vom Momentanwert des Quellsignals (D) entweder auf den Zustand mit Index (i+1) mod n oder den Zustand mit Index (i-1) mod n gewechselt wird.

4. Verfahren nach einem der Ansprüche 2 oder 3, **dadurch gekennzeichnet, dass** n = 4.

5. Verfahren nach einem der vorangehenden Ansprüche, **dadurch gekennzeichnet, dass** die Regel vorschreibt, dass beim nächsten Wechsel des Quellsignals (D) abhängig vom Momentanwert die momentane Durchlaufreihenfolge (1, 2) beibehalten oder umgekehrt wird.

7

6.  Verfahren nach einem der vorangehenden Ansprüche, **dadurch gekennzeichnet, dass** das Quellsignal (D) nach einem Wechsel mindestens eine vorgegebene Auflösungszeit T konstant ist, und dass die Mindestzeit grösser als die doppelte Auflösungszeit 2*T ist.

7.  Verfahren nach einem der vorangehenden Ansprüche, **dadurch gekennzeichnet, dass** das Quellsignal (D) ein anisochrones Signal ist.

8.  Verfahren nach einem der vorangehenden Ansprüche, **dadurch gekennzeichnet, dass** bei konstantem Wert des Quellsignals (D) zur Synchronisation von Sender und Empfänger zusätzlich eine Amplitudenmodulation des Übertragungssignals (s) abhängig vom Wert des Quellsignals (D) durchgeführt wird.

9.  Vorrichtung zum Empfang eines empfangenen Übertragungssignals (r) erzeugt nach dem Verfahren nach einem der vorangehenden Ansprüche, **gekennzeichnet durch**
    einen Phasendetektor (30 - 32) zur Detektion einer relativen momentanen Phasenlage des empfangenen Übertragungssignals (r),
    einen Änderungsdetektor (33 - 45) zum Erzeugen eines Taktsignals (cp) bei einer Änderung der Phasenlage bei einem Wechsel des Zustands des Übertragungssignals (r),
    eine bistabile Schaltung (47) zum Erzeugen eines Ausgangssignals (E) und umschaltbar **durch** eine Synchronisationsschaltung (49),
    eine Verweilerkennung (48) zum Erzeugen eines Synchronisationssignals (de), wenn eine letzte Änderung der Phasenlage um mehr als die Mindestzeit zurück liegt und
    eine Synchronisationsschaltung (49), welche die bistabile Schaltung (47) bei Vorliegen des Synchronisationssignals (de) beim nächsten Taktsignal (cp) entsprechend der Regel setzt oder zurücksetzt.

10. Vorrichtung nach Anspruch 9, **gekennzeichnet durch** eine Speicheranordnung (36) zum Speichern der momentanen Phasenlage ($x_B$, $y_B$) des empfangenen Übertragungssignals (r) als Referenzsignal ($x_R$, $y_R$), wenn die Phase während mindestens einer vorgegebenen Auflösungszeit konstant ist, wobei der Änderungsdetektor (33 - 45) eine Vergleichsschaltung (40 - 43) aufweist zum Vergleichen des Unterschiedes zwischen der momentanen Phasenlage und dem Referenzsignal mit mindestens einem Schwellwert.

11. Vorrichtung nach Anspruch 10, **dadurch gekennzeichnet, dass** der Phasendetektor (30 - 32) Mittel umfasst zum Erzeugen von zwei Signale $x_B$, $y_B$, entsprechend dem Sinus und dem Kosinus der Phasenlage, dass die Speicheranordnung Mittel umfasst zum Speichern der Signale $x_B$, $y_B$ als Signale $x_R$, $y_R$, wenn die Phase während mindestens einer vorgegebenen Auflösungszeit konstant ist, und die Vergleichsschaltung (40 - 43) Mittel umfasst zum Vergleichen der Werte $|x_B \cdot x_R + y_B \cdot y_R|$ und $|y_B \cdot x_R - x_B \cdot y_R|$.

## Revendications

1.  Procédé de transmission d'un signal source binaire (D) possédant deux états dans un signal de transmission (s) à modulation de phase entre un émetteur et un récepteur, au moins trois états (Pi) ayant des phases différentes étant prédéfinis pour le signal de transmission (s) et l'état du signal de transmission (s) étant modifié à chaque changement du signal source (D), **caractérisé en ce que**

    - le signal source binaire (D) est anisochrone et le signal de transmission (s) est transmis de manière anisochrone
    - au moins une séquence de passage (1, 2) est prédéfinie par les états (Pi), laquelle définit pour chaque état exactement un état suivant,
    - et lorsque le signal source (D) ne change pas d'état pendant une durée minimale donnée, il se produit, au prochain changement du signal source (D), un passage à l'état suivant selon la séquence de passage (1, 2) ou à un autre état, et ce conformément à une règle prédéfinie dépendante de la valeur momentanée du signal source (D).

2.  Procédé selon la revendication précédente, **caractérisé en ce que** n états $P_0$ à $P_{n-1}$ sont prédéfinis dont les phases possèdent les valeurs 0, 2*pi/n, 4*pi/n, ... (n-1)*2*pi/n, et que la séquence de passage prescrit de passer de manière cyclique par les états $P_i$ avec un indice i croissant ou décroissant.

3.  Procédé selon la revendication 2, **caractérisé en ce que** la règle prescrit qu'en partant d'un état ayant pour indice i, lors du prochain changement du signal source (D), on passe soit à l'état ayant pour indice (i+1) mod n, soit à l'état ayant pour indice (i-1) mod n, et ce en fonction de la valeur momentanée du signal source (D).

4. Procédé selon l'une des revendications 2 ou 3, **caractérisé en ce que** n = 4.

5. Procédé selon l'une des revendications précédentes, **caractérisé en ce que** la règle prescrit qu'au prochain changement du signal source (D), suivant la valeur momentanée, la séquence de passage (1, 2) est conservée ou inversée.

6. Procédé selon l'une des revendications précédentes, **caractérisé en ce que** le signal source (D) est constant après un changement pendant au moins une durée de résolution T donnée et que la durée minimale est supérieure au double de la durée de résolution 2*T.

7. Procédé selon l'une des revendications précédentes, **caractérisé en ce que** le signal source (D) est un signal anisochrone.

8. Procédé selon l'une des revendications précédentes, **caractérisé en ce qu'**en présence d'une valeur constante du signal source (D), une modulation d'amplitude du signal de transmission (s) en fonction de la valeur du signal source (D) est effectuée en plus pour la synchronisation de l'émetteur et du récepteur.

9. Dispositif de réception d'un signal de transmission (r) reçu généré d'après le procédé selon l'une des revendications précédentes, **caractérisé par**
un détecteur de phase (30 - 32) destiné à détecter une phase momentanée relative du signal de transmission (r) reçu,
un détecteur de modification (33 - 45) destiné à générer un signal d'horloge (cp) jusqu'à une modification de la phase lors d'un changement d'état du signal de transmission (r),
un circuit bistable (47) destiné à générer un signal de sortie (E) et pouvant être inversé par un circuit de synchronisation (49),
un détecteur d'arrêt momentané (48) destiné à générer un signal de synchronisation (de) lorsque le dernier changement de phase est retardé de plus de la durée minimale et
un circuit de synchronisation (49) qui, en présence du signal de synchronisation (de), met à 1 ou à 0 le circuit bistable (47) au prochain signal d'horloge (cp) conformément à la règle.

10. Dispositif selon la revendication 9, **caractérisé par** un arrangement de mémoire (36) pour mémoriser la phase momentanée ($x_B$, $Y_B$) du signal de transmission (r) reçu sous la forme d'un signal de référence ($x_R$, $Y_R$) lorsque la phase est constante pendant au moins une durée de résolution prédéfinie, le détecteur de modification (33 - 45) présentant un circuit comparateur (40 - 43) pour compenser la différence entre la phase momentanée et le signal de référence avec au moins une valeur de seuil.

11. Dispositif selon la revendication 10, **caractérisé en ce que** le détecteur de phase (30 - 32) comprend des moyens pour générer deux signaux $x_B$, $y_B$ correspondant au sinus et au cosinus de la phase, que l'arrangement de mémoire comprend des moyens pour mémoriser les signaux $x_B$, $y_B$ sous la forme de signaux $x_R$, $y_R$ lorsque la phase est constante pendant au moins une durée de résolution prédéfinie et le circuit comparateur (40 - 43) présente des moyens pour comparer les valeurs $|x_B \cdot x_R + y_B \cdot y_R|$ et $|y_B \cdot x_R - x_B \cdot y_R|$.

**Claims**

1. Method for transmitting a binary source signal (D) having two states in a transmission signal (s) with phase modulation between a transmitter and a receiver, with at least three states ($P_i$) of different phase being specified for the transmission signal (s), and with the state of the transmission signal (s) being changed on each change of the source signal (D),
**characterized in that**

- the binary source signal (D) is anisochronous and the transmission signal (s) is transmitted anisochronously,
- at least one sequence (1, 2) for passing through the states is predetermined by the states ($P_i$) and defines one and only one next state for each state,
- and, if the source signal (D) does not change the state during a predetermined minimum time, a change is made either to the next state in accordance with the sequence (1, 2) for passing through the states, or a change is made to another state, in accordance with a predetermined rule, which is dependent on the instantaneous value of the source signal (D), on the next change of the source signal (D).

2. Method according to Claim 1, **characterized in that** n states $P_0$ to $P_{n-1}$ are specified, whose phases have the values 0, 2*pi/n, 4*pi/n, ... (n-1)*2*pi/n and **in that** the sequence for passing through the states specifies the states $P_i$ which are to be passed through cyclically with an increasing or decreasing index i.

3. Method according to Claim 2, **characterized in that** the rule specifies that, starting from the state with the index i, a change is made either to the state with the index (i + 1) mod n or to the state with the index (i - 1) mod n, depending on the instantaneous value of the source signal (D), when the next change in the source signal (D) occurs.

4. Method according to one of Claims 2 or 3, **characterized in that** n = 4.

5. Method according to one of the preceding claims, **characterized in that** the rule specifies that the instantaneous sequence (1, 2) for passing through the states is retained or reversed as a function of the instantaneous value when the next change in the source signal (D) occurs.

6. Method according to one of the preceding claims, **characterized in that** the source signal (D) is constant at least for a predetermined resolution time T after a change, and **in that** the minimum time is greater than twice the resolution time 2*T.

7. Method according to one of the preceding claims, **characterized in that** the source signal (D) is an anisochronous signal.

8. Method according to one of the preceding claims, **characterized in that**, in addition, the transmission signal (s) is amplitude-modulated as a function of the value of the source signal (D) for synchronization of the transmitter and receiver if the value of the source signal (D) is constant.

9. Apparatus for receiving a received transmission signal (r) produced in accordance with the method according to one of the preceding claims, **characterized by**
a phase detector (30 - 32) for detection of a relative instantaneous phase angle of the received transmission signal (r),
a change detector (33 - 45) for production of a clock signal (cp) in the event of a change in the phase angle when a change occurs in the state of the transmission signal (r),
a bistable circuit (47) for production of an output signal (E) and which can be switched by a synchronization circuit (49),
a dwell identification (48) for production of a synchronization signal (de) when more than the minimum time has passed since the last change in the phase angle, and
a synchronization circuit (49) which sets or resets the bistable circuit (47) in accordance with the rule when the next clock signal (cp) occurs and the synchronization signal (de) is present.

10. Apparatus according to Claim 9, **characterized by** a memory arrangement (36) for storing the instantaneous phase angle ($x_B$, $y_B$) of the received transmission signal (r) as a reference signal ($x_R$, $Y_R$) if the phase is constant throughout at least a predetermined resolution time, with the change detector (33 - 45) having a comparison circuit (40 - 43) for comparing the difference between the instantaneous phase angle and the reference signal with at least one threshold value.

11. Apparatus according to Claim 10, **characterized in that** the phase detector (30 - 32) has means for producing two signals $x_B$, $y_B$, corresponding to the sine and cosine of the phase angle, **in that** the memory arrangement has means for storing the signals $x_B$, $Y_B$ as signals $x_R$, $y_R$ if the phase is constant throughout at least a predetermined resolution time, and the comparison circuit (40 - 43) has means for comparing the values $|X_B{\cdot}X_R + Y_B{\cdot}Y_R|$ and $|Y_B{\cdot}X_R - X_B{\cdot}Y_R|$.

Fig. 1

Fig. 2

Fig. 3

Fig. 4

Fig. 5

Fig. 6

Fig. 7

Fig. 8